# EUROPÄISCHE PATENTSCHRIFT

(11) **EP 3 445 645 B1**
(45) Veröffentlichungstag und Bekanntmachung des Hinweises auf die Patenterteilung: **24.02.2021**
(21) Anmeldenummer: 17718041.1
(22) Anmeldetag: 11.04.2017
(51) Int. Cl.: B62J 17/02, B62J 9/00

(54) **KAROSSERIEVERKLEIDUNG FÜR EIN KRAFTFAHRZEUG SOWIE KRAFTFAHRZEUG**
FAIRING FOR MOTORVEHICLE AND MOTORVEHICLE
CARÉNAGE POUR VÉHICULE ET VÉHICULE

(30) Priorität: 22.04.2016 DE 102016206842
(43) Veröffentlichungstag der Anmeldung: 27.02.2019
(73) Patentinhaber: Bayerische Motoren Werke Aktiengesellschaft, 80809 München (DE)
(72) Erfinder: HIRN, Armin, 82061 Neuried (DE)
(86) Internationale Anmeldenummer: PCT/EP2017/058589
(87) Internationale Veröffentlichungsnummer: WO 2017/182316

(56) Entgegenhaltungen:
- WO-A1-2011/129082
- DE-A1-102015 102 896
- JP-A- S61 235 281
- JP-A- 2001 247 068
- JP-U- S59 100 689
- US-A- 4 619 476

## Beschreibung

Es wird eine Karosserieverkleidung für ein Kraftfahrzeug mit einem exponierten Fahrer angegeben. Bei dem Kraftfahrzeug kann es sich insbesondere um ein einspuriges Kraftfahrzeug, wie z.B. um ein Motorrad, handeln. Weiterhin wird eir solches Kraftfahrzeug mit einer Karosserieverkleidung angegeben.

Bei Motorrädern muss zusätzlicher Stauraum meist in Form von Seiten koffern, Topcases oder Tankrucksäcken bei Bedarf extra montiert werden.

Die Druckschrift DE 8608553 U1 beschreibt beispielsweise einen solchen Tankrucksack für Krafträder mit einer Gepäcksaufnahme mit einem Deckelteil und mit einer auf dem Deckelteil angeordneten ausfaltbaren Zusatzgepäcksaufnahme .

Nur wenige Motorräder am Markt besitzen in die Karosserie integrierte Staufächer. Diese sind jedoch meist nur für kleine Gegenstände geeignet. Das Volumen derartiger Staufächer beträgt meist weniger als einen Liter.

In der Druckschrift ist DE 10 2008 021 981 A1 ein Zweirad mit einem Hinterrad, einer Sitzbank, die sich über den Bereich des Hinterrad erstreckt, und einem Staufach mit einem Bodenelement beschrieben. Das Bodenelement kann eine erste, obere Stellung, in der das Staufach ein erstes Stauvolumen aufweist, und eine zweite, untere Stellung einnehmen, in der das Staufach ein zweites, größeres Stauvolumen aufweist. Das Zweirad kann in der zweiten Stellung des Bodenelements des Staufaches nicht gefahren werden

Die Druckschrift WO2011129082 zeigt ein Fahrzeug gemäß der Präambel des Anspruchs 1.

Nachteilig bei den im Stand der Technik bekannten Lösungen ist, dass entweder zusätzlicher Stauraum extra montiert werden muss, woraus sich ein umständliches Handling ergibt, oder dass die angebauten bzw. eingebauten Stauvolumen das Erscheinungsbild bzw. den Fahrbetrieb beeinflussen oder verhindern. Darüber hinaus können auch die Aerodynamik, und damit der Kraftstoffverbrauch, die Fahrstabilität und folglich auch die Fahrsicherheit negativ beeinflusst werden.

Es ist eine zu lösende Aufgabe zumindest einiger Ausführungsformen, eine Karosserieverkleidung für ein Kraftfahrzeug anzugeben, welche einen variablen Stauraum aufweist und keinen negativen Einfluss auf den Fahrbetrieb hat. Weiterhin kann die Karosserieverkleidung eine Windschutz- und/oder Wetterschutzfunktion haben.

Diese Aufgaben werden durch einen Gegenstand gemäß dem unabhängigen Patentanspruch gelöst. Vorteilhafte Ausführungsformen und Weiterbildungen des Gegenstandes gehen weiterhin aus den abhängigen Patentansprüchen, der nachfolgenden Beschreibung und aus den Zeichnungen hervor.

Die hier beschriebene Karosserieverkleidung für ein Kraftfahrzeug weist gemäß Anspruch 1 ein erstes Verkleidungsteil und ein zweites Verkleidungsteil auf. Erfindungsgemäß ist das Kraftfahrzeug als Kraftfahrzeug mit einem exponierten Fahrer, beispielsweise als Einspurfahrzeug, wie z.B. ein Motorrad, oder als drei- oder vierrädriges Fahrzeug, wie z.B. ein dreirädriger Roller oder ein sogenanntes Quad bzw. ATV ("All Terrain Vehicle", Geländefahrzeug), ausgebildet. Die Karosserieverkleidung kann vorzugsweise dazu ausgebildet sein, zumindest einen Teil eines Kraftfahrzeugs abzudecken. Das zweite Verkleidungsteil ist beweglich zum ersten Verkleidungsteil ausgebildet. Das erste Verkleidungsteil kann z.B. starr mit Teilen der Karosserie oder des Fahrwerks des Kraftfahrzeugs verbunden sein. Beispielsweise kann das erste Verkleidungsteil unmittelbar oder mittelbar über weitere Teile starr mit einem Rahmen und/oder mit einem Tank des Kraftfahrzeugs verbunden sein.

Die Karosserieverkleidung ist derart ausgebildet, dass das zweite Verkleidungsteil zumindest in einer ersten Position relativ zum ersten Verkleidungsteil und einer zweiten Position relativ zum ersten Verkleidungsteil angeordnet sein kann. Die Karosserieverkleidung kann einen geöffneten Zustand aufweisen, in welchem das zweite Verkleidungsteil in der zweiten Position relativ zum ersten Verkleidungsteil angeordnet ist. Im geöffneten Zustand der Karosserieverkleidung ist ein Stauraum zwischen dem ersten Verkleidungsteil und dem zweiten Verkleidungsteil ausgebildet. Der Stauraum eignet sich vorzugsweise zum Verstauen von Gegenständen und kann insbesondere ein Volumen von mehr als 1,0 Liter, besonders bevorzugt von mehr als 5,0 Litern, aufweisen.

Gemäß einer weiteren Ausführungsform ist das zweite Verkleidungsteil mit dem ersten Verkleidungsteil drehbar gelagert verbunden. Beispielsweise kann zwischen dem ersten Verkleidungsteil und dem zweiten Verkleidungsteil zumindest ein Scharnier, an welchem das erste und das zweite Verkleidungsteil befestigt sind, angeordnet sein. Bevorzugt sind zwischen dem ersten Verkleidungsteil und dem zweiten Verkleidungsteil zwei Scharniere angeordnet, mittels derer das zweite Verkleidungsteil relativ zum ersten Verkleidungsteil drehbar gelagert ist.

Gemäß der erfindungsgemäßen Ausführungsform ist bzw. sind das erste Verkleidungsteil und/oder das zweite Verkleidungsteil als Verkleidungsseitenteil bzw. Verkleidungsseitenteile ausgebildet. Insbesondere kann es sich dabei um Verkleidungsseitenteile eines Motorrads handeln. Beispielsweise weisen die Verkleidungsteile einen thermoplastischen Kunststoff auf oder bestehen aus einem thermoplastischen Kunststoff. Beispielsweise kann es sich bei den Verkleidungsteilen um spritzgegossene Kunststoffteile handeln. Darüber hinaus können die Verkleidungsteile einen duroplastischen Kunststoff, einen Faserverbundstoff, wie z.B. einen carbonfaserverstärkten Kunststoff, und/oder ein Metall bzw. Metallblech aufweisen oder aus einem dieser Materialien bestehen. Vorzugsweise sind das erste Verkleidungsteil und/oder das zweite Verkleidungsteil nach außen hin sichtbare Außenhautbauteile eines Kraftfahrzeugs bzw. eines Einspurfahrzeugs.

Gemäß einer weiteren Ausführungsform weist die Karosserieverkleidung im geöffneten Zustand, in dem das zweite Verkleidungsteil in der zweiten Position relativ zum ersten Verkleidungsteil angeordnet ist, einen größeren Stauraum auf als in einem weiteren Zustand, in dem das zweite Verkleidungsteil in der ersten Position relativ zum ersten Verkleidungsteil angeordnet ist. Insbesondere kann die Karosserieverkleidung im geöffneten Zustand ein größeres Volumen zum Unterbringen von Gegenständen umfassen als im weiteren Zustand. Bei dem weiteren Zustand kann es sich z.B. um einen geschlossenen Zustand der Karosserieverkleidung handeln, in welchem die Karosserieverkleidung einen geschlossenen Hohlraum bildet. Beispielsweise können das erste Verkleidungsteil und das zweite Verkleidungsteil im weiteren Zustand derart zueinander angeordnet sein, dass zwischen dem ersten Verkleidungsteil und dem zweiten Verkleidungsteil ein geschlossener Hohlraum ausgebildet ist. Dieser geschlossene Hohlraum weist vorzugsweise ein geringeres Volumen auf als der zwischen dem ersten und zweiten Verkleidungsteil ausgebildete Stauraum im geöffneten Zustand der Karosserieverkleidung. Alternativ kann es sich bei dem weiteren Zustand um einen Zustand der Karosserieverkleidung handeln, in welchem kein vollständig geschlossener Hohlraum ausgebildet ist.

Gemäß einer weiteren Ausführungsform handelt es sich bei dem zwischen dem ersten und zweiten Verkleidungsteil ausgebildeten Stauraum um einen bei einer bestimmungsgemäßen Benutzung der Karosserieverkleidung während einer Fahrt des Kraftfahrzeugs bzw. Einspurfahrzeuges nutzbaren Stauraum. Mit anderen Worten kann der Stauraum im geöffneten Zustand der Karosserieverkleidung vorzugsweise auch dann genutzt werden, wenn das Kraftfahrzeug bzw. Einspurfahrzeug gefahren wird. Dieses vorteilhafterweise dadurch möglich, dass keinerlei Komponenten der Karosserieverkleidung den Fahrbetrieb verhindern.

Gemäß einer weiteren Ausführungsform ist die Karosserieverkleidung derart ausgebildet, dass das zweite Verkleidungsteil mit dem ersten Verkleidungsteil im weiteren Zustand, in dem das zweite Verkleidungsteil in der ersten Position relativ zum ersten Verkleidungsteil angeordnet ist, mittels eines Rastmechanismus verrastet ist. Mittels des Rastmechanismus kann das zweite Verkleidungsteil im weiteren Zustand derart am ersten Verkleidungsteil fixiert sein, dass ein geschlossener Hohlraum zwischen dem ersten Verkleidungsteil und dem zweiten Verkleidungsteil ausgebildet sein kann.

Gemäß einer weiteren Ausführungsform bietet die Karosserieverkleidung im geöffneten Zustand, in dem das zweite Verkleidungsteil in der zweiten Position relativ zum ersten Verkleidungsteil angeordnet ist, bei einer bestimmungsgemäßen Benutzung der Karosserieverkleidung einem Fahrer des Kraftfahrzeugs bzw. Einspurfahrzeugs einen verbesserten Windschutz. Beispielsweise kann die Karosserieverkleidung im geöffneten Zustand dem Fahrer des Kraftfahrzeugs bzw. Einspurfahrzeugs einen größeren Windschutz bieten als im weiteren Zustand der Karosserieverkleidung. Dies kann beispielsweise dadurch erreicht werden, dass die Karosserieverkleidung im geöffneten Zustand eine größere Anströmfläche, insbesondere eine größere Anströmfläche bei einer Fahrt des Kraftfahrzeugs bzw. Einspurfahrzeugs in Hauptfahrtrichtung, aufweist als im weiteren Zustand.

Gemäß einer weiteren Ausführungsform kann die Karosserieverkleidung mittels eines Rastmechanismus im weiteren Zustand, in dem das zweite Verkleidungsteil in der ersten Position relativ zum ersten Verkleidungsteil angeordnet ist, fixiert sein. Vorzugsweise kann der Rastmechanismus mittels eines von außerhalb der Karosserieverkleidung zugänglichen Betätigungselements entriegelt werden. Bei dem Betätigungselement kann es sich beispielsweise um einen Druckknopf handeln. Vorzugsweise ist der Druckknopf derart ausgebildet, dass er einhändig bedient werden kann.

Gemäß einer weiteren Ausführungsform kann die Karosserieverkleidung im weiteren Zustand bzw. geschlossenen Zustand, in welcher das zweite Verkleidungsteil in der zweiten Position relativ zum ersten Verkleidungsteil angeordnet ist, verschlossen werden. Beispielsweise kann die Karosserieverkleidung in dieser Position des zweiten Verkleidungsteils mittels einer Zentralverriegelung abgeschlossen werden. Dadurch ergibt sich vorteilhafterweise ein geeigneter Diebstahlschutz, da im Stauraum angeordnete Gegenstände von außen her nicht mehr frei zugänglich sind.

Gemäß einer weiteren Ausführungsform ist zwischen dem ersten Verkleidungsteil und dem zweiten Verkleidungsteil ein Federelement angeordnet, mittels dessen das zweite Verkleidungsteil von der ersten Position in die zweite Position bewegt werden kann. Bei dem Federelement kann es sich z.B. um eine Gasdruckfeder handeln. Vorzugsweise ist die Gasdruckfeder derart angeordnet, dass sich das zweite Verkleidungsteil im weiteren Zustand bzw. im geschlossenen Zustand der Karosserieverkleidung nach Betätigen des Betätigungselements automatisch von der ersten Position in die zweite Position relativ zum ersten Verkleidungsteil bewegt.

Gemäß einer weiteren Ausführungsform weist die Karosserieverkleidung eine Mehrzahl von unterschiedlichen Raststellungen auf, in welchen das zweite Verkleidungsteil in verschiedenen Positionen relativ zum ersten Verkleidungsteil fixiert werden kann. Vorzugsweise weist die Karosserieverkleidung insbesondere neben der ersten und zweiten Position des zweiten Verkleidungsteils eine Vielzahl von weiteren möglichen Positionen des zweiten Verkleidungsteils auf, in welchem das zweite Verkleidungsteil fixiert werden kann. Dadurch kann vorteilhafterweise der zwischen dem ersten Verkleidungsteil und zweiten Verkleidungsteil ausgebildete Stauraum nach Bedarf angepasst werden. Weiterhin kann dadurch erreicht werden, dass die Anströmfläche der Karosserieverkleidung beliebig variiert werden kann, um dem Fahrer und/oder Beifahrer des Kraftfahrzeugs bzw. Einspurfahrzeugs einen nötigen Wind- bzw. Wetterschutz zu bieten.

Gemäß einer weiteren Ausführungsform weist die Karosserieverkleidung eine Innentasche auf, welche zwischen dem ersten Verkleidungsteil und dem zweiten Verkleidungsteil angeordnet ist. Beispielsweise kann die Innentasche am ersten und/oder zweiten Verkleidungsteil befestigt sein. Vorzugsweise dient die Innentasche dazu, Gegenstände wirksam vor Feuchtigkeit, wie z.B. vor Spritzwasser, zu schützen. Die Innentasche kann z.B. einen Synthesekautschuk, wie z.B. Polychloropren, aufweisen. Weiterhin kann die Innentasche eine Beschichtung aus PVC (Polyvinylchlorid) aufweisen. Vorzugsweise umfasst die Innentasche einen Reißverschluss, mittels dessen die Innentasche geöffnet bzw. geschlossen werden kann. Der Reißverschluss kann Dichtlippen zum Schutz vor Feuchtigkeit aufweisen. Im weiteren bzw. geschlossenen Zustand der Karosserieverkleidung, in welchem das zweite Verkleidungsteil in der zweiten Position relativ zum ersten Verkleidungsteil angeordnet ist, kann die Innentasche vollständig im geschlossenen Hohlraum, welche durch das erste und zweite Verkleidungsteil gebildet ist, angeordnet sein. Weiterhin kann die Innentasche derart ausgebildet sein, dass sie aus der Karosserieverkleidung entnehmbar ist. Beispielsweise kann die Innentasche mit lösbaren Verbindungselementen, wie z.B. mit Klettverschluss oder lösbaren Haken, lösbar befestigt in der Karosserieverkleidung angeordnet sein. Darüber hinaus kann die Innentasche beispielsweise als tragbarer Rucksack mit Tragriemen ausgeführt sein.

Weiterhin wird ein Kraftfahrzeug für einen exponierten Fahrer angegeben, welches eine hier beschriebene Karosserieverkleidung aufweist. Die Karosserieverkleidung des Kraftfahrzeugs kann ein oder mehrere Merkmale der vorgenannten Ausführungsformen aufweisen. Das Kraftfahrzeug kann insbesondere als einspuriges Kraftfahrzeug, wie z.B. als Motorrad oder als Motorroller, ausgebildet sein.

Vorzugsweise ist die Karosserieverkleidung derart ausgebildet, dass der Stauraum zwischen dem ersten Verkleidungsteil und dem zweiten Verkleidungsteil auch während einer Fahrt mit dem Kraftfahrzeug nutzbar ist. Vorzugsweise ist ein Fahrbetrieb des Kraftfahrzeugs unabhängig von der Position des zweiten Verkleidungsteils relativ zum ersten Verkleidungsteil möglich.

Gemäß einer weiteren Ausführungsform weist das Kraftfahrzeug bei einer Fahrt in Hauptfahrtrichtung eine Anströmfläche auf, wobei die Anströmfläche des Kraftfahrzeugs im geöffneten Zustand der Karosserieverkleidung größer ist als die Anströmfläche im weiteren Zustand bzw. im geschlossenen Zustand der Karosserieverkleidung. Dadurch kann vorteilhafterweise ein verbesserter Windschutz und/oder Wetterschutz von Fahrer und/oder Beifahrer erreicht werden. Vorzugsweise ist die Karosserieverkleidung derart angeordnet, dass bei einer Fahrt in Hauptfahrtrichtung zumindest ein Teil des Fahrtwindes durch die Karosserieverkleidung, insbesondere durch das zweite Verkleidungsteil, abgelenkt werden kann. Je nach Position des zweiten Verkleidungsteils relativ zum ersten Verkleidungsteil kann eine verminderte oder vergrößerte Fahrtwindablenkung erfolgen.

Gemäß einer weiteren Ausführungsform ist die Karosserieverkleidung derart ausgebildet, dass sie für einen Fahrer des Kraftfahrzeugs im Sitzen zugänglich ist. Vorzugsweise können Gegenstände in den Stauraum gelegt oder aus dem Stauraum entnommen werden, ohne dass sich der Fahrer des Kraftfahrzeugs vom Sitz des Kraftfahrzeugs erheben muss. Weiterhin ist das Betätigungselement vorzugsweise derart angeordnet, dass es vom Fahrer des Kraftfahrzeugs von der Fahrerposition aus erreichbar ist.

Die hier beschriebene Karosserieverkleidung kann einen variablen Stauraum für kleine bis mittlere Gegenstände, wie z.B. Tablet-PC, Netbook, Regenjacke, etc., bieten. Im geschlossenen Zustand der Karosserieverkleidung ist vorteilhafterweise keine Beeinträchtigung von Optik, Design oder Funktion gegeben. Auch im geöffneten Zustand der Karosserieverkleidung kann das Kraftfahrzeugs betrieben werden, wobei sich vorteilhafterweise aufgrund der vergrößerten Anströmfläche ein verbesserter Windschutz ergibt.

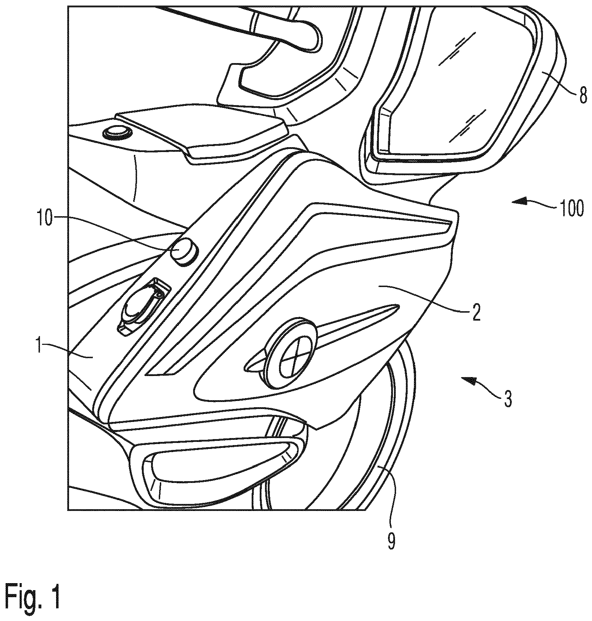

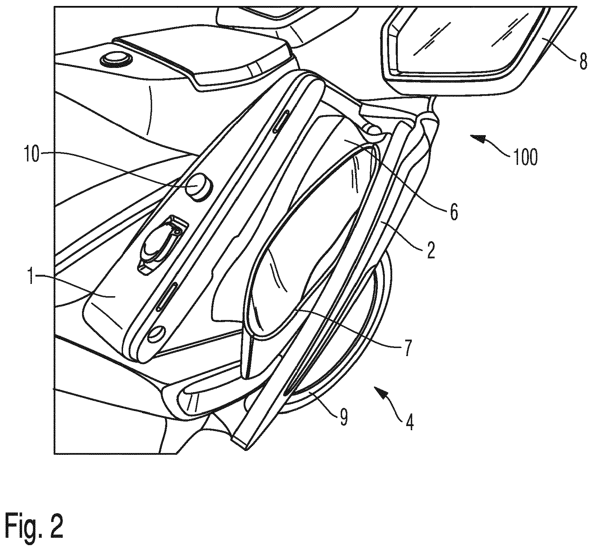

Weitere Vorteile und vorteilhafte Ausführungsformen der hier beschriebenen Karosserieverkleidung ergeben sich aus den im Folgenden in Verbindung mit den Figuren 1 und 2 beschriebenen Ausführungsformen. Es zeigen:
- Figur 1: eine perspektivische Ansicht einer Karosserieverkleidung in einem geschlossenen Zustand gemäß einem Ausführungsbeispiel, und
- Figur 2: eine perspektivische Ansicht der Karosserieverkleidung in einem geöffneten Zustand gemäß einem weiteren Ausführungsbeispiel.

In den Ausführungsbeispielen und Figuren können gleiche oder gleich wirkende Bestandteile jeweils mit den gleichen Bezugszeichen versehen sein.

Die Figuren 1 und 2 zeigen eine Karosserieverkleidung 100, die ein erstes Verkleidungsteil 1 und ein zweites Verkleidungsteil 2, das beweglich zum ersten Verkleidungsteil 1 angeordnet ist, aufweist. Das erste Verkleidungsteil 1 und das zweite Verkleidungsteil 2 sind jeweils als Verkleidungsseitenteil eines Motorrads ausgebildet. Neben der Karosserieverkleidung 100 sind in den Figuren 1 und 2 weiterhin ein Seitenspiegel 8 und ein Teil eines Vorderrads 9 des Einspurfahrzeugs zu erkennen.

In der Figur 1 ist die Karosserieverkleidung 100 eines Einspurfahrzeugs in einem geschlossenen Zustand 3 dargestellt. Die Figur 2 zeigt die Karosserieverkleidung 100 aus der Figur 1 in einem geöffneten Zustand 4. Der geschlossene Zustand 3 der Karosserieverkleidung 100 wird in der Beschreibung dieser Anmeldung auch als "weiterer Zustand" bezeichnet. Im geschlossenen Zustand 3 ist das zweite Verkleidungsteil 2 in einer ersten Position relativ zum ersten Verkleidungsteil 1 angeordnet. Im geöffneten Zustand 4 ist das zweite Verkleidungsteil 2 in einer zweiten Position relativ zum ersten Verkleidungsteil 1 angeordnet. Das erste Verkleidungsteil 1 und das zweite Verkleidungsteil 2 definieren im geschlossenen Zustand 3 der Karosserieverkleidung 100 einen geschlossenen Hohlraum, dessen Volumen als Stauraum zur Unterbringung von Gegenständen genutzt werden kann. Im geöffneten Zustand 4 der Karosserieverkleidung ist ein vergrößerter Stauraum zwischen dem ersten Verkleidungsteil 1 und im zweiten Verkleidungsteil ausgebildet. Dieser vergrößerte Stauraum weist ein größeres Volumen als der geschlossene Hohlraum der Karosserieverkleidung 100 im geschlossenen Zustand 3 auf.

Im geschlossenen Zustand 3 ist das zweite Verkleidungsteil 2 mittels eines Rastmechanismus mit dem ersten Verkleidungsteil 1 verrastet. Zum Lösen des Rastmechanismus weist die Karosserieverkleidung 100 einen Druckknopf 10 auf. Weiterhin weist Karosserieverkleidung 100 eine Gasdruckfeder auf, welche derart eingerichtet ist, dass das zweite Verkleidungsteil 2 nach dem Betätigen des Druckknopfes 10 von der ersten Position in die zweite Position relativ zum ersten Verkleidungsteil 1 bewegt wird.

Zwischen dem ersten Verkleidungsteil 1 und dem zweiten Verkleidungsteil 2 ist eine Innentasche 6 mit einem Reißverschluss 7 zum Öffnen bzw. Schließen der Innentasche 6 angeordnet. Vorzugsweise ist Innentasche 6 am ersten Verkleidungsteil 1 und/oder am zweiten Verkleidungsteil 2 befestigt. Mittels der Innentasche 6 können Gegenstände beispielsweise vor Spritzwasser geschützt werden. Der Reißverschluss 7 weist vorteilhafterweise Dichtlippen zum Schutz vor Feuchtigkeit auf.

Vorzugsweise kann das zweite Verkleidungsteil 2 in einer Mehrzahl von weiteren Positionen relativ zum ersten Verkleidungsteil 1 arretiert werden. Dadurch ergibt sich vorteilhafterweise ein variabler Stauraum, der je nach Bedarf vom Fahrer angepasst werden kann. Weiterhin kann je nach Stellung des zweiten Verkleidungsteils 2 der Wind- bzw. Wetterschutz für den Fahrer und/oder Beifahrer des Einspurfahrzeugs variiert werden.

Alternativ oder zusätzlich können die in den Figuren gezeigten Ausführungsbeispiele weitere Merkmale gemäß den Ausführungsformen der allgemeinen Beschreibung aufweisen.

### Bezugszeichenliste

- 1: erstes Verkleidungsteil
- 2: zweites Verkleidungsteil
- 3: geschlossener Zustand
- 4: geöffneter Zustand
- 6: Innentasche
- 7: Reißverschluss
- 8: Seitenspiegel
- 9: Vorderrad
- 10: Druckknopf
- 100: Karosserieverkleidung

## Patentansprüche

1. Karosserieverkleidung (100) für ein Kraftfahrzeug mit einem exponierten Fahrer, insbesondere für ein einspuriges Kraftfahrzeug, aufweisend
- ein erstes Verkleidungsteil (1),
- ein zweites Verkleidungsteil (2), das beweglich zum ersten Verkleidungsteil (1) angeordnet ist,
- wobei die Karosserieverkleidung (100) derart ausgebildet ist, dass das zweite Verkleidungsteil (2) zumindest in einer ersten Position relativ zum ersten Verkleidungsteil (1) und einer zweiten Position relativ zum ersten Verkleidungsteil (1) angeordnet sein kann,
- wobei in einem geöffneten Zustand (4) der Karosserieverkleidung (100), in welchem das zweite Verkleidungsteil (2) in der zweiten Position relativ zum ersten Verkleidungsteil (1) angeordnet ist, ein Stauraum zwischen dem ersten Verkleidungsteil (1) und dem zweiten Verkleidungsteil (2) ausgebildet ist, **dadurch gekennzeichnet dass** das erste Verkleidungsteil (1) und/oder das zweite Verkleidungsteil (2) als Verkleidungsseitenteil ausgebildet sind.

2. Karosserieverkleidung nach Anspruch 1, wobei das zweite Verkleidungsteil (2) mit dem ersten Verkleidungsteil (1) drehbar gelagert verbunden ist.

3. Karosserieverkleidung nach einem der vorhergehenden Ansprüche, wobei die Karosserieverkleidung (100) im geöffneten Zustand (4), in welchem das zweite Verkleidungsteil (2) in der zweiten Position relativ zum ersten Verkleidungsteil (1) angeordnet ist, einen größeren Stauraum aufweist als in einem weiteren Zustand (3), in dem das zweite Verkleidungsteil (2) in der ersten Position relativ zum ersten Verkleidungsteil (1) angeordnet ist.

4. Karosserieverkleidung nach Anspruch 3, wobei die Karosserieverkleidung (100) im weiteren Zustand (3) einen geschlossenen Hohlraum bildet.

5. Karosserieverkleidung nach einem der vorhergehenden Ansprüche, wobei der zwischen dem ersten Verkleidungsteil (1) und dem zweiten Verkleidungsteil (2) ausgebildete Stauraum ein bei einer bestimmungsgemäßen Benutzung der Karosserieverkleidung (100) während einer Fahrt des Kraftfahrzeugs nutzbarer Stauraum ist.

6. Karosserieverkleidung nach einem der vorhergehenden Ansprüche, wobei das zweite Verkleidungsteil mit dem ersten Verkleidungsteil im weiteren Zustand (3), in welchem das zweite Verkleidungsteil (2) in der ersten Position relativ zum ersten Verkleidungsteil (1) angeordnet ist, mittels eines Rastmechanismus verrastet ist.

7. Karosserieverkleidung nach einem der vorhergehenden Ansprüche, wobei die Karosserieverkleidung (100) im geöffneten Zustand (4), in welchem das zweite Verkleidungsteil (2) in der zweiten Position relativ zum ersten Verkleidungsteil (1) angeordnet ist, bei einer bestimmungsgemäßen Benutzung der Karosserieverkleidung (100) einem Fahrer des Kraftfahrzeugs einen verbesserten Windschutz bietet.

8. Karosserieverkleidung nach einem der vorhergehenden Ansprüche, wobei die Karosserieverkleidung (100) mittels eines Rastmechanismus im weiteren Zustand (3) gehalten werden kann, und wobei der Rastmechanismus mittels eines von außerhalb der Karosserieverkleidung (100) zugänglichen Betätigungselements entriegelt werden kann.

9. Karosserieverkleidung nach einem der vorhergehenden Ansprüche, wobei zwischen dem ersten Verkleidungsteil (1) und dem zweiten Verkleidungsteil (2) ein Federelement, insbesondere eine Gasdruckfeder, angeordnet ist, und wobei das zweite Verkleidungsteil (2) mittels des Federelements von der ersten Position in die zweite Position bewegt werden kann.

10. Karosserieverkleidung nach einem der vorhergehenden Ansprüche, aufweisend eine Innentasche, welche zwischen dem ersten Verkleidungsteil (1) und dem zweiten Verkleidungsteil (2) angeordnet ist.

11. Kraftfahrzeug für einen exponierten Fahrer, insbesondere einspuriges Kraftfahrzeug, aufweisend eine Karosserieverkleidung (100) gemäß einem der vorhergehenden Ansprüche.

12. Kraftfahrzeug gemäß Anspruch 11, wobei der zwischen dem ersten Verkleidungsteil (1) und dem zweiten Verkleidungsteil (2) ausgebildete Stauraum ein während einer Fahrt des Kraftfahrzeugs nutzbarer Stauraum ist.

13. Kraftfahrzeug gemäß einem der Ansprüche 11 oder 12, wobei das Kraftfahrzeug bei einer Fahrt in Hauptfahrtrichtung eine Anströmfläche aufweist, wobei die Anströmfläche des Kraftfahrzeugs im geöffneten Zustand (4) der Karosserieverkleidung (100) größer ist als die Anströmfläche des Kraftfahrzeugs im weiteren Zustand (3) der Karosserieverkleidung (100).

## Claims

1. Body cladding (100) for a motor vehicle with an exposed driver, in particular for a single-track vehicle, having
- a first cladding part (1),
- a second cladding part (2), which is arranged such that it can move in relation to the first cladding part (1),
- wherein the body cladding (100) is formed in such a way that the second cladding part (2) can be arranged at least in a first position relative to the first cladding part (1) and a second position relative to the first cladding part (1),
- wherein, in an open state (4) of the body cladding (100), in which the second cladding part (2) is arranged in the second position relative to the first cladding part (1), a stowage space is formed between the first cladding part (1) and the second cladding part (2), **characterized in that** the first cladding part (1) and/or the second cladding part (2) are/is in the form of a side cladding part.

2. Body cladding according to Claim 1, wherein the second cladding part (2) is connected in a rotatably mounted manner to the first cladding part (1).

3. Body cladding according to either of the preceding claims, wherein, in the open state (4), in which the second cladding part (2) is arranged in the second position relative to the first cladding part (1), the body cladding (100) has a larger stowage space than in a further state (3), in which the second cladding part (2) is arranged in the first position relative to the first cladding part (1).

4. Body cladding according to Claim 3, wherein, in the further state (3), the body cladding (100) forms a closed cavity.

5. Body cladding according to one of the preceding claims, wherein the stowage space, which is formed between the first cladding part (1) and the second cladding part (2), is a stowage space which, when the body cladding (100) is used as intended, can be used while the motor vehicle is travelling.

6. Body cladding according to one of the preceding claims, wherein, in the further state (3), in which the second cladding part (2) is arranged in the first position relative to the first cladding part (1), the second cladding part is in a state in which it has been latched to the first cladding part by means of a latching mechanism.

7. Body cladding according to one of the preceding claims, wherein, in the open state (4), in which the second cladding part (2) is arranged in the second position relative to the first cladding part (1), the body cladding (100) provides improved wind protection for a driver of the motor vehicle when the body cladding (100) is used as intended.

8. Body cladding according to one of the preceding claims, wherein the body cladding (100) can be retained in the further state (3) by means of a latching mechanism, and wherein the latching mechanism can be unlocked by means of an actuating element which is accessible from outside the body cladding (100).

9. Body cladding according to one of the preceding claims, wherein a spring element, in particular a gas pressure spring, is arranged between the first cladding part (1) and the second cladding part (2), and wherein the second cladding part (2) can be moved from the first position into the second position by means of the spring element.

10. Body cladding according to one of the preceding claims, having an internal pocket, which is arranged between the first cladding part (1) and the second cladding part (2).

11. Motor vehicle for an exposed driver, in particular a single-track motor vehicle, having a body cladding (100) according to one of the preceding claims.

12. Motor vehicle according to Claim 11, wherein the stowage space, which is formed between the first cladding part (1) and the second cladding part (2), is a stowage space which can be used while the motor vehicle is travelling.

13. Motor vehicle according to either of Claims 11 and 12, wherein, when travelling in the main direction of travel, the motor vehicle has an airflow surface area, wherein the airflow surface area of the motor vehicle in the open state (4) of the body cladding (100) is greater than the airflow surface area of the motor vehicle in the further state (3) of the body cladding (100).

## Revendications

1. Habillage de carrosserie (100) pour un véhicule automobile ayant un conducteur exposé, en particulier pour un véhicule automobile à voie unique, présentant
- une première pièce d'habillage (1),
- une deuxième pièce d'habillage (2) qui est disposée de manière mobile par rapport à la première pièce d'habillage (1),
- l'habillage de carrosserie (100) étant réalisé de telle sorte que la deuxième pièce d'habillage (2) peut être disposée au moins dans une première position par rapport à la première pièce d'habillage (1) et dans une deuxième position par rapport à la première pièce d'habillage (1),
- dans lequel, dans un état ouvert (4) de l'habillage de carrosserie (100), dans lequel la deuxième pièce d'habillage (2) est disposée dans la deuxième position par rapport à la première pièce d'habillage (1), un espace de rangement est réalisé entre la première pièce d'habillage (1) et la deuxième pièce d'habillage (2),
**caractérisé en ce que** la première pièce d'habillage (1) et/ou la deuxième pièce d'habillage (2) sont réalisées sous forme de pièce latérale d'habillage.

2. Habillage de carrosserie selon la revendication 1, dans lequel la deuxième pièce d'habillage (2) est reliée à la première pièce d'habillage (1) par un montage rotatif.

3. Habillage de carrosserie selon l'une quelconque des revendications précédentes, dans lequel l'habillage de carrosserie (100) présente à l'état ouvert (4), dans lequel la deuxième pièce d'habillage (2) est disposée dans la deuxième position par rapport à la première pièce d'habillage (1), un espace de rangement plus grand que dans un autre état (3) dans lequel la deuxième pièce d'habillage (2) est disposée dans la première position par rapport à la première pièce d'habillage (1).

4. Habillage de carrosserie selon la revendication 3, dans lequel l'habillage de carrosserie (100) constitue une cavité fermée dans l'autre état (3).

5. Habillage de carrosserie selon l'une quelconque des revendications précédentes, dans lequel l'espace de rangement réalisé entre la première pièce d'habillage (1) et la deuxième pièce d'habillage (2) est un espace de rangement utilisable pendant un déplacement du véhicule automobile en cas d'utilisation conforme de l'habillage de carrosserie (100).

6. Habillage de carrosserie selon l'une quelconque des revendications précédentes, dans lequel la deuxième pièce d'habillage est verrouillée au moyen d'un mécanisme de verrouillage avec la première pièce d'habillage dans l'autre état (3), dans lequel la deuxième pièce d'habillage (2) est disposée dans la première position par rapport à la première pièce d'habillage (1).

7. Habillage de carrosserie selon l'une quelconque des revendications précédentes, dans lequel, à l'état ouvert (4), dans lequel la deuxième pièce d'habillage (2) est disposée dans la deuxième position par rapport à la première pièce d'habillage (1), l'habillage de carrosserie (100) fournit une meilleure protection contre le vent pour un conducteur du véhicule automobile en cas d'utilisation conforme de l'habillage de carrosserie (100).

8. Habillage de carrosserie selon l'une quelconque des revendications précédentes, dans lequel l'habillage de carrosserie (100) peut être maintenu dans l'autre état (3) au moyen d'un mécanisme de verrouillage, et dans lequel le mécanisme de verrouillage peut être déverrouillé au moyen d'un élément d'actionnement accessible de l'extérieur de l'habillage de carrosserie (100) .

9. Habillage de carrosserie selon l'une quelconque des revendications précédentes, dans lequel, entre la première pièce d'habillage (1) et la deuxième pièce d'habillage (2), un élément de ressort, en particulier un ressort à gaz, est disposé, et dans lequel la deuxième pièce d'habillage (2) peut être déplacée au moyen de l'élément de ressort de la première position à la deuxième position.

10. Habillage de carrosserie selon l'une quelconque des revendications précédentes, présentant une poche intérieure qui est disposée entre la première pièce d'habillage (1) et la deuxième pièce d'habillage (2).

11. Véhicule automobile pour un conducteur exposé, en particulier véhicule automobile à une voie, présentant un habillage de carrosserie (100) selon l'une quelconque des revendications précédentes.

12. Véhicule automobile selon la revendication 11, dans lequel l'espace de rangement réalisé entre la première pièce d'habillage (1) et la deuxième pièce d'habillage (2) est un espace de rangement utilisable pendant un déplacement du véhicule automobile.

13. Véhicule automobile selon l'une quelconque des revendications 11 ou 12, dans lequel le véhicule automobile présente une surface de soufflage pendant un déplacement dans la direction principale de la marche, la surface de soufflage du véhicule automobile à l'état ouvert (4) de l'habillage de carrosserie (100) étant supérieure à la surface de soufflage du véhicule automobile dans l'autre état (3) de l'habillage de carrosserie (100).
